# EUROPÄISCHE PATENTSCHRIFT

(11) **EP 2 263 018 B1**
(45) Veröffentlichungstag und Bekanntmachung des Hinweises auf die Patenterteilung: **19.12.2012**
(21) Anmeldenummer: 09732631.8
(22) Anmeldetag: 24.03.2009
(51) Int. Cl.: F16D 25/061

(54) **HYDRAULISCH ODER PNEUMATISCH BETÄTIGBARES FORMSCHLÜSSIGES SCHALTELEMENT**
POSITIVELY ENGAGING SHIFTING ELEMENT WHICH CAN BE HYDRAULICALLY OR PNEUMATICALLY ACTUATED
ÉLÉMENT DE COMMUTATION À ENGAGEMENT POSITIF POUVANT ÊTRE ACTIONNÉ HYDRAULIQUEMENT OU PNEUMATIQUEMENT

(30) Priorität: 16.04.2008 DE 102008001197
(43) Veröffentlichungstag der Anmeldung: 22.12.2010
(73) Patentinhaber: ZF Friedrichshafen AG, 88038 Friedrichshafen (DE)
(72) Erfinder: REISCH, Matthias, 88214 Ravensburg (DE); DREIBHOLZ, Ralf, 88074 Meckenbeuren (DE); GUMPOLTSBERGER, Gerhard, 88045 Friedrichshafen (DE); MOHR, Mark, 88069 Tettnang (DE); GÖTZ, Manuel, 88212 Ravensburg (DE)
(86) Internationale Anmeldenummer: PCT/EP2009/053430
(87) Internationale Veröffentlichungsnummer: WO 2009/127498

(56) Entgegenhaltungen:
- DE-A1- 10 126 485
- US-A- 3 679 032
- US-A- 6 112 873
- US-A1- 2003 121 745

## Beschreibung

Die vorliegende Erfindung bezieht sich auf ein hydraulisch oder pneumatisch betätigbares formschlüssiges Schaltelement gemäß dem Oberbegriff des Patentanspruchs 1.

Gattungsgemäß offenbart DE10126485 ein solches Schaltelement.

Insbesondere bezieht sich die Erfindung auf ein hydraulisch oder pneumatisch betätigbares formschlüssiges Schaltelement für ein lastschaltbares Automatgetriebe, vorzugsweise für ein Automatgetriebe in Planetenbauweise, Vorgelegebauweise oder in gemischter Bauweise oder für ein stufenloses Getriebe mit mehreren Bereichen, beispielsweise für ein hydrostatisches, mechanisches oder elektrisches Mehrbereichsgetriebe.

Bei lastschaltbaren Automatgetrieben sind in der Regel hydraulisch betätigbare Lamellenschaltelemente vorgesehen. Diese werden über einen hydraulisch betätigten Kolben, dessen Druck durch ein hydraulisches Steuergerät gesteuert wird, zusammengedrückt und auf diese Weise betätigt. Hierbei lässt sich durch gezielte Einstellung der Betätigungskraft und somit des Reibmoments bei Differenzdrehzahl eine Lastschaltung ohne Zugkrafteinbruch darstellen.

In nachteiliger Weise weisen diese Lamellenschaltelemente im offenen Zustand durch den geringen Abstand zwischen den Reibflächen und das darin enthaltende Öl bzw. Luft-Öl-Gemisch Schleppmomente bei Differenzdrehzahl auf.

Formschlüssige Schaltelemente bzw. Klauenkupplungen und Klauenbremsen sind aus vielen anderen Fahrzeug- und insbesondere Getriebeanwendungen bekannt; beispielsweise werden derartig ausgeführte Schaltelemente in automatisierten Vorgelegegetrieben oder in schaltbaren Längs- oder Quersperren eingesetzt. Bei diesen Anwendungen sind die Schaltelemente in der Regel pneumatisch oder elektro-mechanisch betätigbar ausgeführt.

Bei gewissen konstruktiven Gegebenheiten ist es möglich, Lamellenschaltelemente durch formschlüssige Schaltelemente zu ersetzen. Hierbei handelt es sich um Schaltelemente, die bei Hochschaltungen nur abschalten oder um Schaltelemente, die nur im Rückwärtsgang eingelegt sind.

Ein derartiges Getriebe geht beispielsweise aus der DE 10244023 A1 der Anmelderin hervor. Hierbei wird ein Automatgetriebe vorgeschlagen, umfassend mehrere Schaltelemente und mehrere über die Schaltelemente in einen Leistungsfluss schaltbare Zahnräder, bei dem zur Einstellung einer Übersetzung jeweils wenigstens eines der Schaltelemente geschlossen ist.

Bei dem bekannten Getriebe sind die Schaltelemente, welche bei einer Hochschaltung zugeschaltet werden, als reibschlüssige Schaltelemente ausgebildet, wobei die Schaltelemente, welche bei Hochschaltungen jeweils nur ein abzuschaltendes Schaltelement darstellen als formschlüssige Schaltelemente in Klauenform ausgeführt sind. Gemäß der DE 10244023 A1 können die formschlüssigen Schaltelemente als hydraulisch oder mechanisch betätigbare Schaltelemente ausgeführt sein.

Durch den Einsatz von formschlüssigen Schaltelementen bzw. Klauen werden die Schleppmomente weitgehend vermieden. Zudem benötigen Klauen durch die formschlüssige Übertragung geringere Betätigungskräfte und weniger Bauraum als Lamellenschaltelemente.

Um formschlüssige Schaltelemente bzw. Klauen innerhalb eines Automatgetriebes mit hydraulischer Steuerung hydraulisch zu betätigen, ist eine geeignete Betätigung der Klauen durch den bereits vorhandenen Hydraulikdruck besonders vorteilhaft.

Wenn eine Klaue direkt mit einem Kolben eines Hydrauliksystems verbunden ist, resultiert dies in dem Nachteil, dass bei einer Zahn-auf-Zahn-Stellung Rückwirkungen durch das plötzliche Anhalten des Kolbens bei dem Hydrauliksystem, insbesondere bei mehrfachem Abweisen, entstehen. Des weiteren ist bei Überwindung der Zahn-auf-Zahn-Stellung die Einlegegeschwindigkeit der Klaue gegebenenfalls zu gering, um in ausreichend kurzer Zeit eine ausreichende Überdeckung der tragenden Flanken zu erreichen, da die Klauenverschiebegeschwindigkeit vom zur Verfügung stehenden Volumenstrom und somit von der Pumpenauslegung und den Kanalquerschnitten sowie von der Kolbenfläche abhängt.

Es können auch Situationen vorkommen, bei denen bei einer gewissen Differenzgeschwindigkeit die Geschwindigkeit nicht ausreichend ist, um die Klaue bei Treffen der Lücke weit genug einrücken zu können, um eine ausreichende Überdeckung sicherzustellen.

Um dieses Problem zu lösen, kann die Klauenlücke vergrößert werden; alternativ oder zusätzlich dazu kann die Anschrägung der Klauen verändert werden. Für den Fall der Vergrößerung der Klauenlücke wächst das Umschlagspiel bei Lastwechsel am Schaltelement, was sich in nachteiliger Weise ungünstig auf den Fahrkomfort und die Geräuschentwicklung auswirken kann.

Für den Fall der Veränderung der Anschrägung der Klauen entstehen axial wirkende Abweiskräfte, wodurch die Klauen immer mit Druck zuzuhalten sind; zudem wirken diese Axialkräfte auf die betreffenden Axiallager mit entsprechend ungünstigen Auswirkungen auf Lebensdauer und Wirkungsgrad.

Der vorliegenden Erfindung liegt die Aufgabe zugrunde, ein hydraulisch oder pneumatisch betätigbares formschlüssiges Schaltelement anzugeben, welches für den Einsatz in einem lastschaltbaren Automatgetriebe oder in einem stufenlosen Getriebe geeignet ist, bei dem die aus dem Stand der Technik bekannten erwähnten Nachteile vermieden werden. Insbesondere soll die Einspurgeschwindigkeit der Klaue des Schaltelements erhöht werden und eine ausreichende Überdeckung der tragenden Klauenflanken gewährleistet werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein hydraulisch oder pneumatisch betätigbares formschlüssiges Schaltelement vorgeschlagen, umfassend einen hydraulisch oder pneumatisch betätigbaren Kolben, welcher einen Kolbenraum aufweist, in dem sich das hydraulische Medium bzw. Druckmedium befindet, eine Klaue mit einer Klauenverzahnung und eine Gegenklaue, in die die Klauenverzahnung im eingerückten Zustand eingreift, bei dem die Einspurgeschwindigkeit der Klaue durch Entkopplung der Klaue vom hydraulischen bzw. pneumatischen Volumenstrom bei einer Zahn-auf-Zahn-Stellung der Klaue und der Gegenklaue zueinander und durch Vorspannen der Klaue durch eine mit dem Kolben in Wirkverbindung stehende mechanische Einrichtung erhöht wird.

Gemäß einer Weiterbildung der Erfindung wird die Klauenlücke, d. h. das Fenster, in welchem die Klaue einspuren kann, so gering wie möglich gehalten, damit die Wahrscheinlichkeit einer Zahn-auf-Zahn-Stellung im angelegten Zustand des Schaltelementes möglichst hoch ist. Hierbei bleibt in einem definierten Drehzahlfenster genügend Zeit, um ausreichend viel Volumenstrom nachzuschieben und in der mechanischen Einrichtung die daraus resultierende Energie zu speichern. Wenn die Klaue auf eine Lücke trifft, wird erfindungsgemäß die Klaue durch die gespeicherte Energie sehr stark beschleunigt, wodurch eine ausreichende Überdeckung der Klauenflanken gewährleistet wird.

Im Rahmen der Erfindung wird vorgeschlagen, die mechanische Einrichtung zum Vorspannen der Klaue des Schaltelementes als Feder auszuführen, welche zwischen dem hydraulisch oder pneumatisch betätigten Kolben, dessen Druck durch ein hydraulisches bzw. pneumatisches Steuergerät gesteuert wird und der Klaue des Schaltelementes derart angeordnet ist, dass sie die Klaue und den Kolben auseinanderdrückt.

Das Schaltelement weist gemäß der Erfindung zusätzlich eine Rückhalteeinrichtung auf, welche die Klaue zwischen sich und der Feder fängt, um zu verhindern, dass die Klaue axial betrachtet in Richtung auf die Gegenklaue bewegt wird, wenn der Kolben nicht betätigt wird.

Des weiteren ist eine weitere Feder zum Zurückschieben der Klaue vorgesehen, wobei diese Feder gegen den Kolben wirkt, wenn dieser hydraulisch betätigt wird.

Die Erfindung wird im folgenden anhand der beigefügten Figuren beispielhaft näher erläutert. Es zeigen:
- Figur 1 :: Eine schematische Schnittansicht einer bevorzugten Ausführungsform eines erfindungsgemäßen formschlüssigen Schaltelementes im ausgerückten Zustand;
- Figur 2:: Eine schematische Schnittansicht des erfindungsgemäßen formschlüssigen Schaltelementes aus Figur 1 im angelegten Zustand;
- Figur 3:: Eine schematische Schnittansicht des erfindungsgemäßen formschlüssigen Schaltelementes aus Figur 1 im vorgespannten Zustand;
- Figur 4:: Eine schematische Schnittansicht des erfindungsgemäßen formschlüssigen Schaltelementes aus Figur 1 im eingelegten Zustand; und
- Figur 5:: Eine schematische Schnittansicht einer weiteren bevorzugten Ausführungsform eines erfindungsgemäßen formschlüssigen Schaltelementes im ausgerückten Zustand.

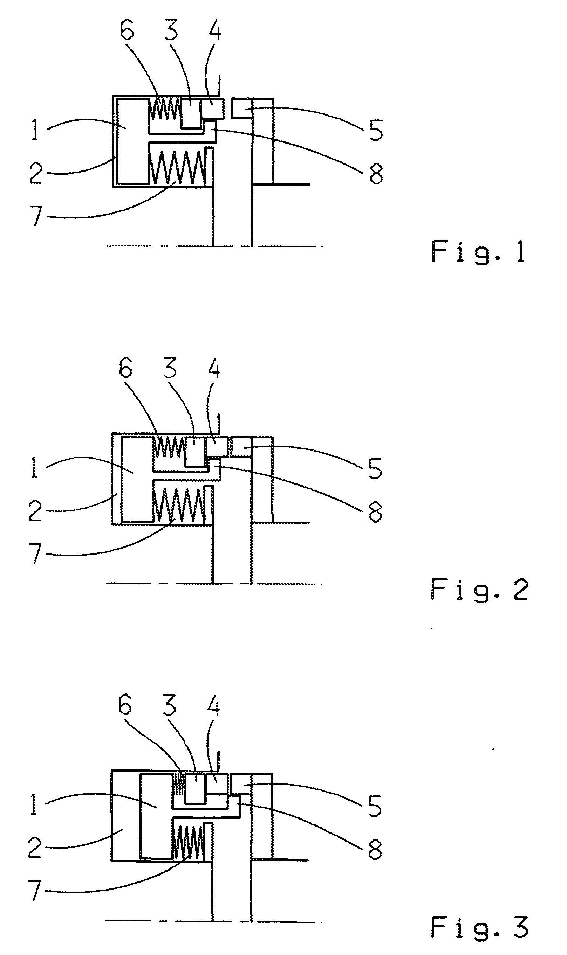

In Figur 1 ist ein beispielhafter Zusammenbau eines hydraulisch oder pneumatisch betätigbaren formschlüssigen Schaltelementes gemäß der Erfindung gezeigt.

Das Schaltelement umfasst einen hydraulisch oder pneumatisch betätigbaren Kolben 1, welcher einen Kolbenraum 2 aufweist, in dem sich das hydraulische Medium bzw. Druckmedium befindet, eine Klaue 3 mit einer Klauenverzahnung 4 und eine Gegenklaue 5, in die die Klauenverzahnung 4 im eingerückten Zustand eingreift.

Gemäß der Erfindung ist als mechanische Einrichtung zum Vorspannen der Klaue 3 eine Feder 6 vorgesehen, welche zwischen dem Kolben 1 und der Klaue 3 derart angeordnet ist, dass sie die Klaue 3 und den Kolben 1 auseinanderdrückt. Durch die Feder 3 wird ein Weiterverschieben des Kolbens 1 bei einer Zahn-auf-Zahn-Stellung der Klauen 3 und 5 zueinander ermöglicht.

Des weiteren ist, wie Figur 1 zu entnehmen, eine weitere als Ausrückfeder dienende Feder 7 zum Zurückschieben (für den Fall dass der Zustand des Schaltelementes im drucklosen Zustand offen ist, was der gezeigten Ausführungsform entspricht) oder zum Einrücken (für den Fall dass der Zustand des Schaltelementes im drucklosen Zustand geschlossen ist) der Klaue 3 vorgesehen, wobei die Feder 7 gegen den Kolben 1 wirkt, wenn dieser hydraulisch bzw. pneumatisch betätigt wird.

Bei dem in Figur 1 gezeigten Beispiel ist das Schaltelement im drucklosen Zustand offen, so dass die Feder 7 gegen den Kolben 1 wirkt, wenn dieser nach rechts verschoben wird.

Für den Fall eines Schaltelementes, welches im drucklosen Zustand geschlossen bzw. eingerückt ist (normally-closed-Anordnung) vertauschen sich der Kolbenraum 2 und die Feder 7.

Im Rahmen einer weiteren, nicht dargestellten Ausführungsform ist anstelle der Feder 7 ein weiterer Druckraum vorgesehen, so dass das Zurückschieben (für den Fall dass der Zustand des Schaltelementes im drucklosen Zustand offen ist) bzw. das Ausrücken (für den Fall dass der Zustand des Schaltelementes im drucklosen Zustand geschlossen ist) der Klaue durch Aufbauen eines Gegendrucks, der auf den Kolben 1 wirkt, hydraulisch erfolgt.

Gemäß der Erfindung ist bei dem Schaltelement eine Rückhalteeinrichtung 8 vorgesehen, welche die Klaue 3 zwischen sich und der Feder 6 fängt, um zu verhindern, dass die Klaue 3 axial betrachtet in Richtung auf die Gegenklaue bewegt wird, wenn der Kolben 1 nicht betätigt wird. Bei dem gezeigten Beispiel ist die Rückhalteeinrichtung als Teil des Kolbens 1 ausgeführt und formschlüssig ausgebildet; die Klaue 3 wird zwischen der Feder 6 und der Einrichtung 8 gehalten. Vorzugsweise ist die Rückhalteeinrichtung 8 mit dem Kolben 1 einstückig ausgebildet.

Des weiteren ist gemäß der Erfindung vorgesehen, dass die Klauenlücke so gering wie möglich gehalten wird, damit die Wahrscheinlichkeit einer Zahn-auf-Zahn-Stellung beim Anlegen des Schaltelementes möglichst hoch ist.

In Figur 2 ist das in Figur 1 gezeigte erfindungsgemäße Schaltelement im angelegten Zustand gezeigt, wobei die Stellung von Klaue 3 und Gegenklaue 5 zueinander eine Zahn-auf-Zahn-Stellung ist; die Feder 3 ist noch nicht vorgespannt.

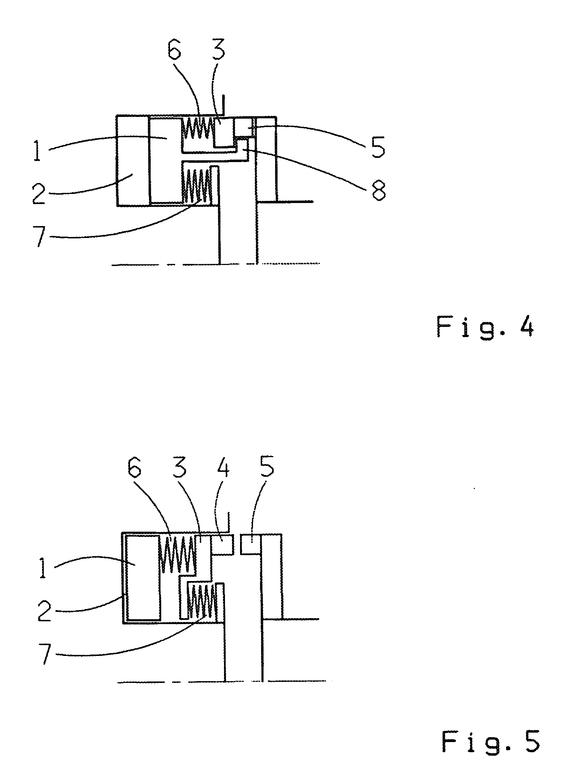

Wenn der Kolben 1 bei der Zahn-auf-Zahn-Stellung bedingt durch den Volumenstrom weiter in Richtung auf die Maximalposition bewegt wird (d.h. in den Figuren nach rechts), wird, wie in Figur 3 dargestellt, die Feder 6 zusammengedrückt und vorgespannt, wobei wenn die Klaue 3 bzw. die Klauenverzahnung 4 bei einer weiteren Drehung auf eine Lücke der Gegenklaue trifft, die Klaue 3 durch die in der Feder 6 gespeicherte Energie sehr stark beschleunigt und somit sehr schnell eingerückt wird, wodurch eine ausreichende Überdeckung der tragenden Klauenflanken gewährleistet wird. Das erfindungsgemäße Schaltelement im eingerückten Zustand ist Gegenstand der Figur 4.

Im Rahmen einer weiteren Ausführungsform der Erfindung, welche Gegenstand der Figur 5 ist, wirkt die Ausrückfeder 7 nicht direkt auf den Kolben 1 sondern direkt auf die Klaue 3 und damit indirekt über die Feder 6 auf den Kolben 1; die Feder 3 ist analog zum Ausführungsbeispiel gemäß Figuren 1, 2, 3 und 4 zwischen der Klaue 3 und dem Kolben 1 vorgesehen und ermöglicht ein Weiterverschieben des Kolbens bei einer Zahn-auf-Zahn-Stellung und somit eine dadurch bedingte Vorspannung der Feder 3. Bei dem in Figur 5 gezeigten Beispiel ist eine separate Rückhalteeinrichtung nicht erforderlich, da eine Bewegung der Klaue 3 ohne eine Betätigung des Kolbens 1 durch die Feder 7 verhindert wird.

Gemäß der Erfindung können die Federn 6 und 7 als einzelne Spiralfedern, als Spiralfederpakete, als Tellerfedern, als Tellerfederpakete oder als sonstige mechanische Federn ausgeführt sein.

Ferner kann als Druckmedium zur Betätigung des Kolbens Öl, Luft oder ein sonstiges geeignetes Druckmedium verwendet werden.

Zudem können die Klauenverzahnungen sowohl als Axialklauen als auch als Radialklauen bzw. als beliebige formschlüssige zur Drehmomentübertragung geeignete Einrichtungen ausgebildet sein. Bei einem Einsatz als Klauenkupplung, d. h. wenn beide Seiten drehen, kann in vorteilhafter Weise ein zusätzlicher Rotationsausgleich vorgesehen sein, der beispielsweise im Raum der Ausrückfeder angeordnet sein kann.

Selbstverständlich fällt auch jede konstruktive Ausbildung, insbesondere jede räumliche Anordnung der Bauteile des erfindungsgemäßen Schaltelementes an sich sowie zueinander und soweit technisch sinnvoll, unter den Schutzumfang der vorliegenden Ansprüche, ohne die Funktion des Schaltelementes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Kolben
- 2: Kolbenraum
- 3: Klaue
- 4: Klauenverzahnung
- 5: Gegenklaue
- 6: Feder
- 7: Ausrückfeder
- 8: Rückhalteeinrichtung

## Patentansprüche

1. Hydraulisch oder pneumatisch betätigbares formschlüssiges Schaltelement, umfassend einen hydraulisch oder pneumatisch betätigbaren Kolben (1), welcher einen Kolbenraum (2) aufweist, in dem sich das hydraulische Medium bzw. Druckmedium befindet, eine Klaue (3) mit einer Klauenverzahnung (4) und eine Gegenklaue (5), in die die Klauenverzahnung (4) im eingerückten Zustand eingreift, sowie eine als Feder (6) ausgeführte mechanische Einrichtung, wobei die Klaue (3) zwischen der Feder (6) und einer Rückhalteeinrichtung gefangen ist, **dadurch gekennzeichnet, dass** das Schaltelement mittels einer Druckbeaufschlagung des Kolbens (1) einrückbar ist und dass die Feder (6) zum Vorspannen der Klaue (3) zwischen dem Kolben (1) und der Klaue (3) des Schaltelementes derart angeordnet ist, dass sie die Klaue (3) und den Kolben (1) auseinanderdrückt, und bei einer Zahn-auf-Zahn-Stellung der Klauen (3) und Gegenklanen (5) zueinander ein Weiterverschieben des Kolbens (1) und somit eine dadurch bedingte Vorspannung der Feder (6) ermöglicht, so dass, wenn die Klaue (3) bzw. die Klauenverzahnung (4) bei einer weiteren Drehung auf eine Lücke der Gegenklaue (5) trifft, die Klaue (3) durch die in der Feder (6) gespeicherte Energie beschleunigt und somit schnell genug eingerückt wird, um eine ausreichende Überdeckung der tragenden Klauenflanken zu gewährleisten.

2. Hydraulisch oder pneumatisch betätigbares formschlüssiges Schaltelement nach Anspruch 1, **dadurch gekennzeichnet, dass** eine Ausrückfeder (7) zum Zurückschieben der Klaue (3) vorgesehen ist, wobei die Ausrückfeder (7) gegen den Kolben (1) wirkt, wenn dieser hydraulisch bzw. pneumatisch betätigt wird.

3. Hydraulisch oder pneumatisch betätigbares formschlüssiges Schaltelement nach Anspruch 2, **dadurch gekennzeichnet, dass** die Ausrückfeder (7) direkt auf den Kolben (1) wirkt.

4. Hydraulisch oder pneumatisch betätigbares formschlüssiges Schaltelement nach Anspruch 1, **dadurch gekennzeichnet, dass** ein weiterer Druckraum vorgesehen ist, so dass ein Zurückschieben der Klaue (3) durch Aufbauen eines Gegendrucks, der auf den Kolben 1 wirkt, hydraulisch erfolgt.

5. Hydraulisch oder pneumatisch betätigbares formschlüssiges Schalt-element nach Anspruch 2 oder 3, **dadurch gekennzeichnet, dass** die Ausrückfeder (7) direkt auf die Klaue (3) und damit indirekt über die Feder (6) auf den Kolben (1) wirkt, wobei eine Bewegung der Klaue (3) ohne eine Betätigung des Kolbens (1) durch die Feder (7) verhindert wird, so dass die Ausrückfeder (7) in dieser Anordnung als Rückhaltevorrichtung tätig ist.

6. Hydraulisch oder pneumatisch betätigbares formschlüssiges Schaltelement nach Anspruch 1, **dadurch gekennzeichnet, dass** die Rückhalteeinrichtung (8) als Teil des Kolbens (1) ausgeführt und formschlüssig ausgebildet ist.

7. Hydraulisch oder pneumatisch betätigbares formschlüssiges Schaltelement nach Anspruch 1, **dadurch gekennzeichnet, dass** die Rückhalteeinrichtung (8) mit dem Kolben (1) einstückig ausgebildet ist.

8. Hydraulisch oder pneumatisch betätigbares formschlüssiges Schaltelement nach einem der vorangehenden Ansprüche 2, 3 und 5, **dadurch gekennzeichnet, dass** die Feder (6) und die Ausrückfeder (7) als einzelne Spiralfedern, als Spiralfederpakete, als Tellerfedern, als Tellerfederpakete oder als sonstige mechanische Federn ausgeführt sind.

9. Hydraulisch oder pneumatisch betätigbares formschlüssiges Schaltelement nach einem der vorangehenden Ansprüche, **dadurch gekennzeichnet, dass** die Klauenverzahnungen sowohl als Axialklauen als auch als Radialklauen bzw. als beliebige formschlüssige zur Drehmomentübertragung geeignete Einrichtungen ausgebildet sind.

10. Hydraulisch oder pneumatisch betätigbares formschlüssiges Schaltelement nach einem der vorangehenden Ansprüche, **dadurch gekennzeichnet, dass** für den Fall dass beide Seiten des Schaltelementes drehen ein Rotationsausgleich vorgesehen ist.

## Claims

1. Hydraulically or pneumatically actuable positively engaging shifting element, comprising a hydraulically or pneumatically actuable piston (1) which has a piston space (2), in which the hydraulic medium or pressure medium is situated, a claw (3), with a claw toothing system (4), and a mating claw (5), into which the claw toothing system (4) engages in the engaged state, and a mechanical device which is configured as a spring (6), the claw (3) being caught between the spring (6) and a retaining device, **characterized in that** the shifting element can be engaged by means of pressure loading of the piston (1), and **in that** the spring (6) for prestressing the claw (3) is arranged between the piston (1) and the claw (3) of the shifting element in such a way that it presses the claw (3) and the piston (1) apart from one another, and, in the case of a tooth-on-tooth position of the claws (3) and mating claws (5) with respect to one another, makes further displacement of the piston (1) and therefore a prestress, caused thereby, of the spring (6) possible, with the result that, when the claw (3) or the claw toothing system (4) finds a gap of the mating claw (5) during a further rotation, the claw (3) is accelerated by the energy stored in the spring (6) and is therefore engaged quickly enough, in order to ensure a sufficient overlap of the load-bearing claw flanks.

2. Hydraulically or pneumatically actuable positively engaging shifting element according to Claim 1, **characterized in that** a disengagement spring (7) is provided for pushing the claw (3) back, the disengagement spring (7) acting counter to the piston (1) when the latter is actuated hydraulically or pneumatically.

3. Hydraulically or pneumatically actuable positively engaging shifting element according to Claim 2, **characterized in that** the disengagement spring (7) acts directly on the piston (1).

4. Hydraulically or pneumatically actuable positively engaging shifting element according to Claim 1, **characterized in that** a further pressure space is provided, with the result that the claw (3) is pushed back hydraulically by a counterpressure which acts on the piston 1 being built up.

5. Hydraulically or pneumatically actuable positively engaging shifting element according to Claim 2 or 3, **characterized in that** the disengagement spring (7) acts directly on the claw (3) and therefore indirectly via the spring (6) on the piston (1), a movement of the claw (3) without an actuation of the piston (1) being prevented by the spring (7), with the result that the disengagement spring (7) is active in this arrangement as a retaining apparatus.

6. Hydraulically or pneumatically actuable positively engaging shifting element according to Claim 1, **characterized in that** the retaining device (8) is embodied as a part of the piston (1) and is of positively engaging configuration.

7. Hydraulically or pneumatically actuable positively engaging shifting element according to Claim 1, **characterized in that** the retaining device (8) is configured integrally with the piston (1).

8. Hydraulically or pneumatically actuable positively engaging shifting element according to one of the preceding Claims 2, 3 and 5, **characterized in that** the spring (6) and the disengagement spring (7) are configured as individual helical springs, as helical spring assemblies, as disc springs, as disc spring assemblies or as any other mechanical springs.

9. Hydraulically or pneumatically actuable positively engaging shifting element according to one of the preceding claims, **characterized in that** the claw toothing systems are configured both as axial claws and as radial claws or as any desired positively engaging devices which are suitable for torque transmission.

10. Hydraulically or pneumatically actuable positively engaging shifting element according to one of the preceding claims, **characterized in that** a rotational compensation means is provided for the case where both sides of the shifting element rotate.

## Revendications

1. Elément de commutation à engagement positif pouvant être actionné hydrauliquement ou pneumatiquement, comprenant un piston (1) pouvant être actionné hydrauliquement ou pneumatiquement, qui présente une chambre de piston (2) dans laquelle se trouve le fluide hydraulique ou le fluide de pression, une griffe (3) avec une denture de griffe (4) et une griffe conjuguée (5) dans laquelle s'engage la denture de griffe (4) dans l'état embrayé, ainsi qu'un dispositif mécanique réalisé sous forme de ressort (6), la griffe (3) étant capturée entre le ressort (6) et un dispositif de retenue, **caractérisé en ce que** l'élément de commutation peut être embrayé au moyen d'une sollicitation par pression du piston (1) et **en ce que** le ressort (6) est disposé pour précontraindre la griffe (3) entre le piston (1) et la griffe (3) de l'élément de commutation de telle sorte qu'il écarte l'un de l'autre la griffe (3) et le piston (1), et dans le cas d'une position dent sur dent de la griffe (3) et de la griffe conjuguée (5) l'une par rapport à l'autre, permet un déplacement supplémentaire du piston (1) et donc une précontrainte du ressort (6) causée par celui-ci, de telle sorte que lorsque la griffe (3) ou la denture de griffe (4) arrive lors d'une rotation supplémentaire sur un espace entre-dent de la griffe conjuguée (5), la griffe (3) accélère du fait de l'énergie accumulée dans le ressort (6) et donc soit embrayée suffisamment rapidement pour garantir un recouvrement suffisant des flancs de griffe porteurs.

2. Elément de commutation à engagement positif pouvant être actionné hydrauliquement ou pneumatiquement selon la revendication 1, **caractérisé en ce qu'**un ressort de débrayage (7) est prévu pour ramener en arrière la griffe (3), le ressort de débrayage (7) agissant à l'encontre du piston (1) lorsque celui-ci est actionné hydrauliquement ou pneumatiquement.

3. Elément de commutation à engagement positif pouvant être actionné hydrauliquement ou pneumatiquement selon la revendication 2, **caractérisé en ce que** le ressort de débrayage (7) agit directement sur le piston (1).

4. Elément de commutation à engagement positif pouvant être actionné hydrauliquement ou pneumatiquement selon la revendication 1, **caractérisé en ce qu'**il est prévu un espace de pression supplémentaire de telle sorte qu'un déplacement en arrière de la griffe (3) par augmentation d'une contre-pression qui agit sur le piston (1), ait lieu de manière hydraulique.

5. Elément de commutation à engagement positif pouvant être actionné hydrauliquement ou pneumatiquement selon la revendication 2 ou 3, **caractérisé en ce que** le ressort de débrayage (7) agit directement sur la griffe (3) et donc indirectement par le biais du ressort (6) sur le piston (1), un déplacement de la griffe (3) sans l'actionnement du piston (1) étant empêché par le ressort (7) de telle sorte que le ressort de débrayage (7) agisse dans cet agencement sous forme de dispositif de retenue.

6. Elément de commutation à engagement positif pouvant être actionné hydrauliquement ou pneumatiquement selon la revendication 1, **caractérisé en ce que** le dispositif de retenue (8) est réalisé sous forme de partie du piston (1) et est conçu par engagement positif.

7. Elément de commutation à engagement positif pouvant être actionné hydrauliquement ou pneumatiquement selon la revendication 1, **caractérisé en ce que** le dispositif de retenue (8) est réalisé d'une seule pièce avec le piston (1).

8. Elément de commutation à engagement positif pouvant être actionné hydrauliquement ou pneumatiquement selon l'une quelconque des revendications précédentes 2, 3 et 5, **caractérisé en ce que** le ressort (6) et le ressort de débrayage (7) sont réalisés sous forme de ressorts spirale individuels, de paquets de ressorts spirale, de ressorts Belleville, de paquets de ressorts Belleville ou sous forme d'autres ressorts mécaniques.

9. Elément de commutation à engagement positif pouvant être actionné hydrauliquement ou pneumatiquement selon l'une quelconque des revendications précédentes, **caractérisé en ce que** les dentures de griffe sont réalisées à la fois sous forme de griffes axiales et de griffes radiales ou sous forme de dispositifs appropriés quelconques à engagement positif pour le transfert de couple.

10. Elément de commutation à engagement positif pouvant être actionné hydrauliquement ou pneumatiquement selon l'une quelconque des revendications précédentes, **caractérisé en ce que** dans le cas où les deux côtés de l'élément de commutation tournent, il est prévu un équilibrage de rotation.
